# EUROPÄISCHE PATENTSCHRIFT

(11) **EP 2 423 925 B1**
(45) Veröffentlichungstag und Bekanntmachung des Hinweises auf die Patenterteilung: **03.08.2016**
(21) Anmeldenummer: 11006799.8
(22) Anmeldetag: 22.08.2011
(51) Int. Cl.: G21C 19/07, G21C 19/08, G21C 19/40, G21C 15/00

(54) **Brennelementelagerbecken mit Kühlsystem**
Fuel element storage pool with cooling system
Bassin de stockage d'éléments combustibles avec system de refroidissement

(30) Priorität: 31.08.2010 DE 102010035955
(43) Veröffentlichungstag der Anmeldung: 29.02.2012
(73) Patentinhaber: Westinghouse Electric Germany GmbH, 68167 Mannheim (DE)
(72) Erfinder: Schmidt, Marcel, 40211 Düsseldorf (DE); Freis, Daniel, 68259 Mannheim (DE); Haspel, Norbert, 64653 Lorsch (DE)
(74) Vertreter: Fritsch, Klaus

(56) Entgegenhaltungen:
- WO-A1-03/090233
- DE-A1- 3 002 641
- DE-A1- 3 014 289
- DE-A1-102007 024 675
- DE-B1- 2 823 376

## Beschreibung

Die Erfindung betrifft ein Brennelementlagerbecken mit Kühlsystem. Es ist allgemein bekannt, dass in kerntechnischen Stromerzeugungsanlagen als nuklearer Brennstoff vorzugsweise uranhaltige Brennelemente verwendet werden. Diese haben - je nach Reaktortyp - eine zumeist stabähnliche Form, wobei bei einem typischen Druckwasserreaktor von 1200 MW Leistung für eine Kernladung etwa 190 derartiger Brennelemente benötigt werden. Diese sind nach deren jeweiligem Abbrand durch neue zu ersetzen, je nach Nutzungsweise eines Kernreaktors pro Jahr etwa 20% aller Brennelemente.

Hierzu werden die jeweiligen Brennelemente mittels einer entsprechenden roboterähnlichen Vorrichtung dem innerhalb eines Reaktorschutzgebäudes angeordneten Reaktorkern entnommen und in ein benachbartes, ebenfalls im Reaktorschutzgebäude befindliches Brennelementlagerbecken, ein sogenanntes Abklingbecken, umgesetzt und dort zwischengelagert. Auch wenn die Brennelemente derart abgebrannt sind, dass sie nicht mehr in dem Reaktor verwendet werden können, so weisen sie dennoch anfangs eine nicht unerhebliche Nachzerfallsleistung auf, welche mit einer entsprechenden Wärmeerzeugung verbunden ist, die durchaus im MW Bereich liegt.

Um das Bedienpersonal bzw. die Umgebung vor den dabei auftretenden radioaktiven Strahlen zu schützen und um zugleich eine Wärmeabfuhr von den zwischengelagerten Brennelementen sicher zu stellen, ist das Brennelementlagerbecken bzw. das Abklingbecken mit reinem Wasser gefüllt, so dass die eigentliche Brennelementlagerstelle am Fuße des Abklingbeckens seitlich und nach oben von einigen Metern Wasser umgeben ist.

Zu Wartungszwecken des Reaktors wird bedarfsweise sogar die gesamte Kernladung an Brennelementen im Abklingbecken zwischengelagert, so dass eine Zugänglichkeit des Reaktorkerns gewährleistet ist. Je nach Lagerstand fallen im Abklingbecken daher Wärmeleistungen von 10MW und höher an, welche das in ihm befindliche Wasser innerhalb weniger Stunden zum Kochen bringen können, was jedoch aus Sicherheitsgründen unter allen Umständen zu verhindern ist.

Daher verfügen Abklingbecken über Kühlsysteme, welche die entstehende Wärmeleistung über Wärmetauscher einer Wärmesenke zuführen, also einem Bereich oder einer Einrichtung, die Wärme abnehmen kann.

Gemäß dem Stand der Technik werden im Reaktorbereich Kühlsysteme für Abklingbecken ausnahmslos unter Verwendung aktiver Komponenten, insbesondere Pumpen, realisiert. Durch den Einsatz von aktiven Komponenten lässt sich die Effizienz eines hierfür ebenfalls üblichen Wärmetauschers zwar in vorteilhafter Weise steigern, dem steht allerdings gegenüber, dass bei Ausfall der aktiven Komponenten über einen Zeitraum im Stundenbereich gegebenenfalls eine Überhitzung des Abklingbeckens auftreten kann.

Das Patentdokument WO 03/090233 A1 offenbart ein Zwischenlagersystem für Brennelemente aus einer kerntechnischen Anlage. Hierbei ist ein Nasslagerbecken über einen zugeordneten im Naturumlauf betreibbaren Sekundärkühlkreislauf rückkühlbar.

Das Patentdokument DE 28 23 376 B offenbart ein Lager für eine große Zahl von abgebrannten Kernreaktorbrennelementen, bestehend aus einem mit dicken Abschirmwänden versehenen Lagerbehälter, der mit Lagergestellen für die Brennelemente und mit Einrichtungen zur Abführung der Nachzerfallswärme versehen ist, dadurch gekennzeichnet, dass diese Einrichtung aus Wärmerohren an sich bekannter Bauart besteht, deren wärmeabgebende Seite in neben dem Lagerbehälter angeordnete Naturzugkamine hineinragt.

Das Patentdokument DE 30 14 289 A1 offenbart ein Verfahren zum Abführen der Zerfallswärme radioaktiver Substanzen mittels im Kreislauf geführter Flüssigkeit, dadurch gekennzeichnet, dass a) die Flüssigkeit durch die Zerfallswärme teilweise verdampft und die Flüssigkeit im Kreislauf durch das entstandene Flüssigkeitsdampfgemisch angetrieben wird, b) nach Übersteigen einer dem Druckverlust im Kreislaufentsprechenden statischen Höhe das Flüssigkeitsdampfgemisch in Flüssigkeit und Dampf getrennt, c) der Dampf kondensiert und d) das Kondensat mit der abgetrennten Flüssigkeit vereinigt und zur teilweisen Verdampfung zurückgeführt wird.

Das Patentdokument DE 30 02 641 A1 offenbart eine kerntechnische Anlage, aus deren Gebäuden die anfallende Wärme, insbesondere die von abgebrannten Brennelementen erzeugte Nachzerfallswärme mittels einer oder mehrerer Wärmeabfuhreinrichtungen ableitbar ist, wobei für den Wärmetransport vom Gebäudeinneren nach außen ein oder mehrere wenigstens bereichsweise sowohl innerhalb als auch außerhalb jedes Gebäudes angeordnete Wärmeübertrager vorgesehen sind.

Das Patentdokument DE 10 2007 024675 A1 offenbart ein Wärmerohr mit einem phasenwechselnden Kältemittel, insbesondere zur Kühlung elektronischer Bauelemente, aufweisend einen Verdampferbereich und einen Kondensatorbereich, wobei der Verdampferbereich in axialer Richtung des Wärmerohres aus einer Verdampferplatte, einer Verdampferoberflächenstruktur und einer Deckplatte gebildet wird und der Kondensatorbereich in radialer Richtung einen Innenmantel und einen Außenmantel mit Lamellen aufweist, wobei zwischen dem Außenmantel und dem Innenmantel ein Dampfraum als Spalt ausgebildet ist und wobei zwischen einem Verdampfungsbereich und einem Kondensationsbereich des Kältemittels eine Drosselstelle vorgesehen ist.

Auch wenn durch entsprechend häufige Wartung und das Vorsehen entsprechender Notstromsysteme die Wahrscheinlichkeit des Auftretens eines derartigen Ereignisses nahezu ausgeschlossen ist, so ist es aufgrund der extrem hohen Sicherheitsanforderungen im Reaktorbereich wünschenswert, die Zuverlässigkeit für Kühlsysteme von Abklingbecken gerade unter Extrembedingungen weiter zu steigern. Ausgehend von diesem Stand der Technik ist es Aufgabe der Erfindung, ein verbessertes Kühlsystem für Abklingbecken zur Verfügung zu stellen.

Diese Aufgabe wird gelöst durch ein erfindungsgemäßes Brennelementlagerbecken mit Kühlsystem gemäß Anspruch 1. Das Kühlsystem umfasst wenigsens einen ersten Wärmetauscher, der im Brennelementlagerbecken angeordnet ist, tens einen ersten Wärmetauscher, der im Brennetementiagerbecken angeordnet ist, und wenigstens einen zweiten Wärmetauscher, der in einer davon entfernten Wärmesenke oberhalb des höchsten Punktes des ersten Wärmetauschers angeordnet ist, wobei beide Wärmetauscher mit einem Rohrsystem zu einem geschlossenen Kreislauf verbunden sind, welcher zumindest teilweise mit einem strömfähigen Kühlmittel gefüllt ist, so dass bei einer gegenüber dem zweiten Wärmetauscher erhöhten Temperatur des ersten Wärmetauschers ohne Pumpvorrichtung ein Naturumlauf des Kühlmittels und damit ein Wärmetransport vom Brennelementlagerbecken zur Wärmesenke gewährleistet ist.

Die Kernidee der Erfindung besteht darin, auf aktive Komponenten im Kühlsystem gänzlich zu verzichten und damit dessen Ausfallwahrscheinlichkeit weiter zu reduzieren. Eine typische aktive Komponente stellt eine Pumpe dar, welche beispielsweise ein Kühlmittel in einem Zwischenkreis zwischen zwei Wärmetauschern pumpt. Derartige Zwischenkreisläufe sind in Kernanlagen aus Sicherheitsgründen vorteilhaft, um unter allen Umständen ein Austreten von kontaminiertem Wasser aus dem Brennelementlagerbecken in die Umwelt zu verhindern.

Durch den Höhenunterschied zwischen erstem und zweitem Wärmetauscher ist es nämlich möglich, einen sogenannten Naturumlauf des strömfähigen Kühlmittels zu erreichen. Das in den ersten Wärmetauscher vorzugsweise von unten eingeleitete Kühlmittel weist eine gegenüber dem Wärmetauscher niedrigere Temperatur auf und wird beim Durchströmen von dessen inneren Wärmetauschrohren erwärmt, nimmt also maximal die Temperatur des den ersten Wärmetauscher umgebenden Wassers an. Hierbei expandiert das Kühlmittel, so dass es in seiner Dichte abnimmt, also pro Volumeneinheit leichter ist als das nachfließende kältere Kühlmittel.

Der Auslass für den Abfluss des Kühlmittels aus dem ersten Wärmetauscher ist in dessen oberen Bereich vorgesehen, so dass das nachfließende Kühlmittel mit der höheren spezifischen Dichte das erwärmte Kühlmittel mit geringerer spezifischer Dichte nach oben drückt. Oberhalb des ersten Wärmetauschers ist der zweite Wärmetauscher angeordnet, welcher das Kühlmittel kühlt, so dass es im Kreislauf wieder mit entsprechend erhöhter spezifischer Dichte hinunter zum ersten Wärmetauscher fließt.

Zur Erreichung einer gewünschten Kühlleistung ist gegebenenfalls der Durchmesser der Rohre beziehungsweise auch die Kontaktfläche der Wärmetauscher zu erhöhen. Dieser möglicherweise erhöhte konstruktive Aufwand ist jedoch durch ein erhöhtes Maß an Sicherheit gerechtfertigt. Somit ist ein Kühlsystem zur Ausleitung von Wärme aus dem Abklingbecken zur Verfügung gestellt, welches in vorteilhafter Weise auf jegliche aktive Komponente verzichtet.

Erfindungsgemäß ist der wenigstens eine erste Wärmetauscher als Verdampfer und der wenigstens eine zweite Wärmetauscher als Kondensator ausgeführt.

Das Kühlmittel ist in seinem Siede- und Kondensationspunkt unter den gegebenen Druck- und Temperaturverhältnissen derart zu wählen, dass es, wenn es flüssig in den ersten Wärmetauscher bzw. Verdampfer eingeleitet wird, dort verdampft und durch die benötigte Verdampfungsenergie einen deutlich höheren Kühleffekt zur Folge hat. Das nunmehr gasförmige Kühlmittel strömt dann ebenfalls in Richtung des höher gelegenen zweiten Wärmetauschers bzw. Kondensators. Dort geht das Kühlmittel unter Abgabe von Wärmeenergie wieder in den flüssigen Zustand über und kann über den Kreislauf wieder durch die Schwerkraft bedingt ohne Einsatz einer Pumpe dem Verdampfer zugeführt werden. Die Kühlleistung des erfindungsgemäßen Brennelementlagerbeckens mit Kühlsystem wird dadurch in vorteilhafter Weise erhöht.

Entsprechend einer Ausgestaltungsform der Erfindung ist das strömfähige Kühlmittel ein Kältemittel. Kältemittel transportieren ebenso wie Kühlmittel Enthalpie. Der Unterschied ist, dass ein Kältemittel dies auch entgegen einem Temperaturgradienten tun kann, so dass die Umgebungstemperatur sogar höher sein darf als die Temperatur des zu kühlenden Gegenstandes. Im Gegensatz hierzu ist ein Kühlmittel lediglich in der Lage, die Enthalpie entlang des Temperaturgradienten zu einer Stelle niedrigerer Temperatur zu transportieren. Als geeignet hat sich erfindungsgemäß beispielsweise die Gruppe der Kältemittel mit 2 Kohlenstoffatomen erwiesen, welche unter der Bezeichnung R1xx bekannt ist, wobei xx ein Platzhalter für die Nummerierung der verschiedenen Varianten ist, was dem Fachmann jedoch bekannt ist. Als besonders geeignet hat sich das Kältemittel R134a mit seiner chemischen Formel C₂H₂F₄ erwiesen. Auf diese Weise wird die Kühlleistung nochmals gesteigert.

Gemäß einer bevorzugten Variante der Erfindung ist der wenigstens eine erste Wärmetauscher hängend angeordnet, beispielsweise mittels einer geeigneten Haltevorrichtung am Beckenrand. Hierdurch wird das Durchströmen der dann senkrechten Kühlrohre in vorteilhafter Weise erleichtert. Es ist sicherzustellen, dass der erste Wärmetauscher beim Betrieb des Abklingbeckens vollständig unterhalb der Oberfläche der dann notwendigen Wasserfüllung befindlich ist, um so einen maximalen Wärmeaustausch zu gewährleisten. Die beiden notwendigen Rohrzuleitungen können ebenfalls von oben über den Beckenrand zum Wärmetauscher geführt werden, so dass ein Beckenwanddurchbruch nicht notwendig ist. Auf diese Weise ist eine sehr einfache Installation eines Kühlsystems gewährleistet, was bedarfsweise auch ohne großen Aufwand nachgerüstet werden kann.

Es erweist sich als vorteilhaft, an einer Außenfläche des wenigstens einen ersten Wärmetauschers ein Leitblech anzuordnen. Dieses ist derart auszugestalten, dass das durch die Wärmeentwicklung der gelagerten Brennelemente erhitzte Wasser, welches temperaturbedingt von der Brennelementlagerstelle aufsteigt, in Richtung des ersten Wärmetauschers geleitet wird, um so einen verbesserten Wärmeaustausch zu ermöglichen.

Erfindungsgemäß ist der zweite Wärmetauscher 3m - 5m oberhalb des höchsten Punktes des ersten Wärmetauschers angeordnet. Eine derartige Höhendifferenz erweist sich als besonders geeignet, um schwerkraftbedingt so viel Druck des kondensierten bzw. abgekühlten Kühlmittels aufzubauen, dass es auch über eine längere horizontale Entfernung, beispielsweise einige 10m oder auch 100m, vom zweiten Wärmetauscher zurück in den ersten Wärmetauscher fließt. Eine derartige Distanz ergibt sich beispielsweise aus der Entfernung vom Abklingbecken zum Kühlturm. Vorzugsweise sind die Rohrleitungen zwischen erstem und zweitem Wärmetauscher mit einem steten Gefälle auszuführen, insbesondere aber die Rücklaufleitung für das gekühlte bzw. kondensierte Kühlmittel. Dadurch ist ein barrierefreier Naturumlauf des Kühlmittels gewährleistet.

Gemäß einer weiteren Erfindungsvariante sind innerhalb des geschlossenen Kreislaufs punktuell Verschlussmittel vorgesehen, welche im Falle eines plötzlichen Druckabfalls aktiviert werden und einen Umlauf des Kühlmittels unterbinden. Hiermit soll verhindert werden, dass im Falle einer Leckage des Kühlkreislaufes kontaminiertes Wasser vom Abklingbecken über den Wärmetauscher in den Kühlkreislauf bzw. von dort in die Umgebung gelangt.

Erfindungsgemäß wird als Wärmesenke ein Naturzugtrockenkühlturm verwendet. Ein Naturzugtrockenturm erreicht eine forcierte Kühlung der zweiten Wärmetauscher nämlich ebenfalls ohne aktive Komponenten, welche erfindungsgemäß zu vermeiden sind.

Erfindungsgemäß sind mehrere zumindest bezüglich des Kreislaufs voneinander unabhängige Kühlsysteme vorgesehen. Der Einsatz von mehreren gleichartigen Kühlsystemen, welche summarisch eine gewünschte Kühlleistung zur Verfügung stellen, reduziert die Konsequenzen des Ausfalls eines Systems in vorteilhafter Weise. Um eine Unabhängigkeit der der Systeme zu gewährleisten, sind zumindest die Kühlkreisläufe unabhängig voneinander aufzubauen, um bei einer Leckage eines Kühlkreislaufes zumindest mit verringerter Kühlleistung weiter betriebsfähig zu sein. Eine Anordnung von mehreren zweiten Wärmetauschern bzw. Kondensatoren in demselben Kühlturm ist jedoch vertretbar, da die Ausfallwahrscheinlichkeit eines Kühlturms - auch gemessen an den höchsten Sicherheitsanforderungen im Kerntechnikbereich - besonders unwahrscheinlich ist.

Zur nochmaligen Steigerung der Betriebssicherheit bietet es sich an, die Kühlsysteme überredundant auszuführen, also summarisch mehr als die maximal benötigte Kühlleistung zur Verfügung zu stellen, wobei die Leistungsreserve wenigstens die Einzelleistung des leistungsfähigsten Einzelkühlsystems umfasst. Bevorzugter Weise sind die Kühlsysteme gleich auszuführen, wobei insgesamt der Ausfall von zwei Einzelkühlsystemen ausgeglichen werden kann.

Eine weitere Möglichkeit zur Steigerung der Betriebssicherheit besteht darin, dass die Kühlsysteme diversitär ausgeführt sind. Hier wird ebenfalls gegenüber der ausgelegten maximalen Kühlleistung ein Leistungsüberschuss zur Verfügung gestellt, jedoch arbeiten die verschiedenen Kühlsysteme nach verschiedenen Kühlprinzipien. Somit lässt sich beispielsweise ein Teil der benötigten Kühlleistung durch aktive Kühlsysteme, welche die Erfindung eigentlich zu vermeiden sucht, bereitstellen, wobei ein weiterer Teil der Kühlleistung durch erfindungsgemäße passive Kühlsysteme bereitgestellt wird. Durch die Verschiedenheit der Kühlarten ist eine erhöhte Sicherheit gewährleistet, zumindest für einen Teil der maximalen Kühlleistung.

Einer weiteren Ausgestaltungsvariante folgend ist das Kühlsystem für eine Kühlleistung von 5MW - 30MW ausgelegt. Dies entspricht der auszulegenden Kühlleistung für das Abklingbecken eines typischen Reaktors im Leistungsbereich von 600MW bis 1500MW.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen
- Fig. 1: ein exemplarisches Beispiel für ein Brennelementlagerbecken mit Kühlsystem sowie
- Fig. 2: einen exemplarischer Kreislauf mit Kühlmittel

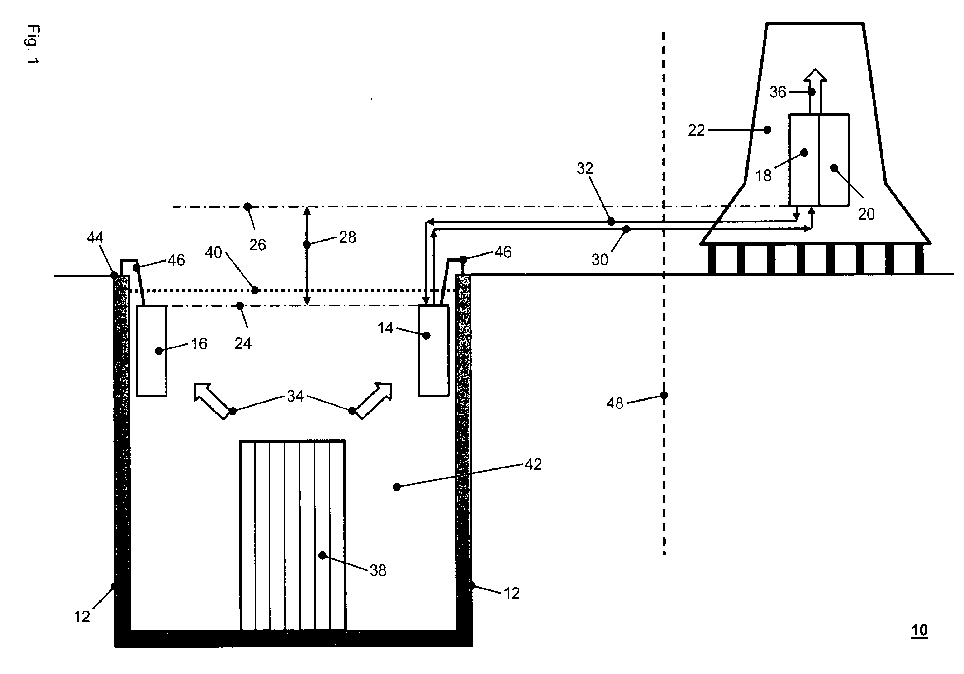

Fig. 1 zeigt ein exemplarisches Beispiel 10 für ein Brennelementlagerbecken mit Kühlsystem. Auf dem Beckengrund eines Brennelementlagerbeckens 12, welches beispielsweise einen Durchmesser von 10m aufweist, ist mittig eine Brennelementlagerstelle 38 angeordnet. Diese weist eine Vielzahl von schachtähnlichen Lagerpositionen für stabähnliche Brennelemente auf, beispielsweise mehrere hundert. Das Brennelementlagerbecken 12 ist mit Wasser 42 gefüllt, wobei der Füllpegel 40 knapp unter dem Beckenrand 44 liegt. Ebenfalls innerhalb des Brennelementlagerbeckens 12 unterhalb des Füllpegels 40 sind zwei erste Wärmetauscher 14, 16 angeordnet, welche mittels eines jeweiligen Halteelementes 46 kraftschlüssig mit dem Beckenrand verbunden sind. Der höchste Punkt der ersten Wärmetauscher 14, 16 ist mit der Bezugslinie 24 angedeutet. Dies ist der Höhenbezugspunkt für erhöht anzuordnende zweite Wärmetauscher 18, 20. In einer realen Anordnung sind jedoch sind jedoch eine Mehrzahl von ersten Wärmetauschern vorzusehen, insbesondere auch aus Redundanzgründen.

Die in der Brennelementlagerstelle 38 gelagerten in der Figur nicht gezeigten Brennelemente geben eine Wärmeleistung, beispielsweise 16MW, in das Wasser 42 ab, welche wie mit dem Pfeil 34 angedeutet ist und letztendlich als Wärmeeintrag in die ersten Wärmetauscher 14, 16 übergeht. Es sind lediglich für den ersten Wärmetauscher 14 die beiden zur Bildung eines Kühlkreislaufs notwendigen Rohrleitungsteile 30, 32 angedeutet, welche selbstverständlich auch für jeden weiteren ersten Wärmetauscher in vorzugsweise unabhängiger Form vorzusehen sind.

Die Rohrleitungsteile 30, 32 sind über den Beckenrand geführt und mit dem ersten Wärmetauscher 14 verbunden, so dass ein Durchbruch der Beckenwandung in vorteilhafter Weise vermieden ist. Vom Abklingbecken 12 werden die Rohrleitungsteile 30, 32 vorzugsweise mit einem steten Gefälle in Richtung des Abklingbeckens 12 durch die den nicht gezeigten Reaktor und das Abklingbecken 12 umgebende Reaktorschutzgebäudewand 48 nach außen in das Zentrum eines als Wärmesenke dienenden Naturzugkühlturms 22 geführt. Dieser hat beispielsweise einen Abstand von 50m zum nicht maßstäblich gezeigten Abklingbecken 12. Im Kühlturm 22 angeordnet sind zwei als Kondensatoren ausgeführte zweite Wärmetauscher 18, 20, wobei die Höhe von deren Unterkante mit der Bezugsziffer 26 angedeutet ist. Zur Oberkante 24 der vorzugsweise als Verdampfer ausgeführten ersten Wärmetauscher 14, 16 ergibt sich eine mit dem Pfeil 28 angedeutete Höhendifferenz, beispielsweise 3m - 5m. Jeder Kondensator 18, 20 ist als unabhängiges Kondensatorfeld mit separaten Zuleitungen 30, 32 auszuführen, um so mehrere voneinander unabhängige Kühlkreisläufe zu bilden. Diese sind mit einem Kühlmittel gefüllt.

Aufgrund des Wärmeeintrags 34 in den Verdampfer 14 verdampft das Kühlmittel und wird im Gaszustand über den zweiten Teil 32 des Rohrleitungssystems zum ersten Kondensator 18 geführt, wo es kondensiert. Die dabei abgegebene Wärmeleistung 36 wird an eine Wärmesenke, in diesem Fall einen Kühlturm 22, abgegeben. Schwerkraftbedingt wird das kondensierte Kühlmittel über den ersten Teil 30 des Rohrleitungssystems in einem steten Gefälle wieder dem Verdampfer 14 zugeführt, womit der Kühlkreislauf geschlossen ist.

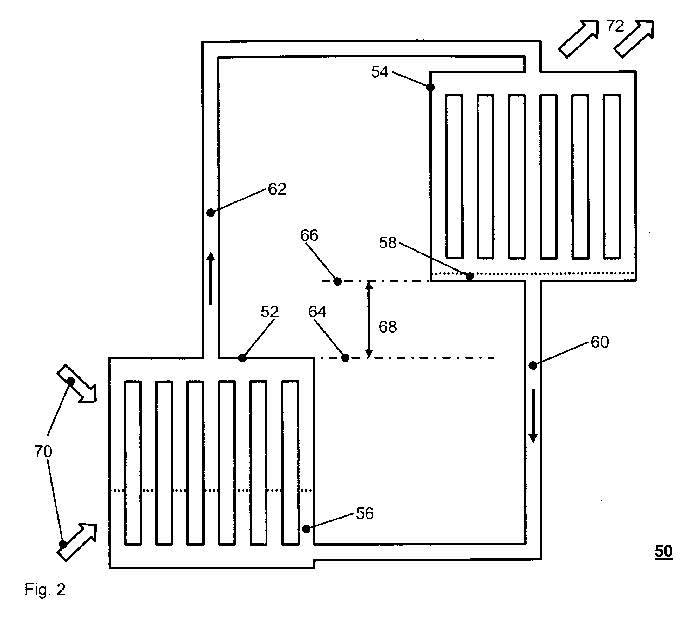

Fig. 2 zeigt einen exemplarischer Kreislauf mit Kühlmittel 50. Ein Verdampfer 52 und ein Kondensator 54 sind über einen ersten 60 und zweiten 62 Teil eines Rohrleitungssystems zu einem geschlossenen Kühlkreislauf verbunden. Der Verdampfer 52 und der Kondensator 54 weisen eine Vielzahl von einzelnen Kühlrohren auf, welche an ihren beiden Enden jeweils über eine Sammelverbindung zu einem jeweiligen Rohranschluss zusammengeführt sind. Die Vielzahl der einzelnen Kühlrohre dient einer Erhöhung der Kontaktfläche und damit einer erhöhten Kühlleistung. Der Verdampfer 52 ist zu einer mit einer gestrichelten Linie angedeuteten Höhe mit einem Kühlmittel 56 gefüllt. Aufgrund eines Wärmeeintrags 70 in den Verdampfer verdampft das Kühlmittel 56 unter Aufnahme einer Wärmeleistung und wird in gasförmiger Form über den Rohrleitungsteil 62 dem Kondensator 54 zugeführt. Dort kondensiert das Kühlmittel unter Abgabe einer Wärmeleistung 72 in einen flüssigen Zustand 58 und wird schwerkraftbedingt über den Rohrleitungsteil 60 wieder dem Verdampfer zugeführt. Der Kondensator 54 ist mit seinem untersten Punkt 66 in einem vertikalen Abstand 68 oberhalb des obersten Punktes 64 des Verdampfers 52 angeordnet, so dass ein Naturumlauf des Kühlmittels 56, 58 gewährleistet ist, ohne dass aktive Komponenten wie eine Pumpe benötigt werden.

### Bezugszeichenliste

- 10: exemplarisches Beispiel für ein Brennelementlagerbecken mit Kühlsystem
- 12: Brennelementlagerbecken
- 14: erster Wärmetauscher
- 16: weiterer erster Wärmetauscher
- 18: zweiter Wärmetauscher
- 20: weiterer zweiter Wärmetauscher
- 22: Naturzugtrockenkühlturm
- 24: höchster Punkt der ersten Wärmetauscher
- 26: unterster Punkt der zweiten Wärmetauscher
- 28: Höhendifferenz
- 30: erster Teil eines ersten Rohrleitungssystems
- 32: zweiter Teil eines ersten Rohrleitungssystems
- 34: Wärmeeintrag in erste Wärmetauscher
- 36: Wärmeaustrag aus zweiten Wärmetauschern
- 38: Brennelementlagerstelle
- 40: Füllpegel des Brennelementlagerbeckens
- 42: Wasser
- 44: Beckenrand
- 46: Halteelement
- 48: Reaktorschutzgebäudewand
- 50: exemplarischer Kreislauf mit Kühlmittel
- 52: Verdampfer
- 54: Kondensator
- 56: flüssiges Kühlmittel in Verdampfer
- 58: flüssiges Kühlmittel in Kondensator
- 60: erster Teil eines zweiten Rohrsystems
- 62: zweiter Teil eines zweiten Rohrsystems
- 64: höchster Punkt des Verdampfers (erster Wärmetauscher)
- 66: unterster Punkt des Kondensators (zweiter Wärmetauscher)
- 68: Höhendifferenz
- 70: Wärmeeintrag in Verdampfer
- 72: Wärmeaustrag aus Kondensator

## Patentansprüche

1. Brennelementlagerbecken mit Kühlsystem (10), wobei das Kühlsystem wenigstens einen ersten Wärmetauscher (14, 16, 52), der im Brennelementlagerbecken (12) angeordnet ist, und wenigstens einen zweiten Wärmetauscher (18, 20, 54), der in einer davon entfernten Wärmesenke oberhalb (28, 68) des höchsten Punktes (24, 64) des ersten Wärmetauschers (14, 16, 52) angeordnet ist, umfasst, wobei beide Wärmetauscher (14, 16, 18, 20, 52, 54) mit einem Rohrsystem (30, 32, 60, 62) zu einem geschlossenen Kreislauf (50) verbunden sind, welcher zumindest teilweise mit einem strömfähigen Kühlmittel (56, 58) gefüllt ist, so dass bei einer gegenüber dem zweiten Wärmetauscher (18, 20, 54) erhöhten Temperatur des ersten Wärmetauschers (14, 16, 52) ohne Pumpvorrichtung ein Naturumlauf des Kühlmittels (56, 58) und damit ein Wärmetransport (34, 36; 70, 72) vom Brennelementlagerbecken (12) zur Wärmesenke gewährleistet ist, wobei der wenigstens eine erste Wärmetauscher (14, 16, 52) als Verdampfer (52) und der wenigstens eine zweite Wärmetauscher (18, 20, 54) als Kondensator (54) ausgeführt ist,
**dadurch gekennzeichnet,**
***dass*** *mehrere zumindest bezüglich des Kreislaufs (50) voneinander unabhängige Kühlsysteme vorgesehen sind,* dass als Wärmesenke ein Naturzugtrockenkühlturm (22) verwendet wird, dass *im Naturzugtrockenkühlturm wenigstens zwei zweite* Wärmetauscher (18, 20, 54) 3m - 5m oberhalb (28, 68) des höchsten Punktes (24, 64) des ersten Wärmetauschers (14, 16, 52) *in einer horizontalen Entfernung von einigen 10m bis 100m zum ersten Wärmetauscher (14, 16,* 52) angeordnet *sind* und dass der die Rücklaufleitung für das kondensierte Kühlmittel bildende Teil des Rohrsystems (30, 32, 60, 62) mit einem steten Gefälle ausgeführt ist.

2. Brennelementlagerbecken nach Anspruch 1, **dadurch gekennzeichnet, dass** das strömfähigen Kühlmittel (56, 58) ein Kältemittel ist.

3. Brennelementlagerbecken nach *einem der Ansprüche 1 oder 2,* **dadurch gekennzeichnet, dass** der wenigstens eine erste Wärmetauscher (14, 16, 52) hängend angeordnet ist.

4. Brennelementlagerbecken nach einem der vorherigen Ansprüche, **dadurch gekennzeichnet, dass** an einer Außenfläche des wenigstens einen ersten Wärmetauschers (14, 16, 52) ein Leitblech angeordnet ist.

5. Brennelementlagerbecken nach einem der vorherigen Ansprüche, **dadurch gekennzeichnet, dass** innerhalb des geschlossenen Kreislaufs (50) punktuell Verschlussmittel vorgesehen sind, welche im Falle eines plötzlichen Druckabfalls aktiviert werden und einen Umlauf des Kühlmittels (56, 58) unterbinden.

6. Brennelementlagerbecken nach einem der vorherigen Ansprüche **dadurch gekennzeichnet, dass** die Kühlsysteme überredundant ausgeführt sind.

7. Brennelementlagerbecken nach einem der vorherigen Ansprüche, **dadurch gekennzeichnet, dass** die Kühlsysteme diversitär ausgeführt sind.

8. Brennelementlagerbecken nach einem der vorherigen Ansprüche, **dadurch gekennzeichnet, dass** das Kühlsystem für eine Kühlleistung von 5MW - 30MW ausgelegt ist.

## Claims

1. Fuel-assembly storage pool with a cooling system (10), wherein the cooling system comprises at least one first heat exchanger (14, 16, 52) arranged in the fuel-assembly storage pool (12), and at least one second heat exchanger (18, 20, 54) arranged in a heat sink which is located at a distance therefrom, above (28, 68) the highest point (24, 64) of the first heat exchanger (14, 16, 52), wherein the two heat exchangers (14, 16, 18, 20, 52, 54) are connected, using a pipe system (30, 32, 60, 62), to form a closed circuit (50) which is at least partially filled with a flowable coolant (56, 58) such that, if the temperature of the first heat exchanger (14, 16, 52) is increased with respect to the second heat exchanger (18, 20, 54), natural circulation of the coolant (56, 58), and thus heat transport (34, 36; 70, 72) from the fuel-assembly storage pool (12) to the heat sink, is ensured without a pump apparatus, wherein the at least one first heat exchanger (14, 16, 52) is configured as an evaporator (52) and the at least one second heat exchanger (18, 20, 54) is configured as a condenser (54), **characterized in that** a plurality of cooling systems which are independent from one another at least with respect to the circuit (50) is provided, **in that** a natural draft dry cooling tower (22) is used as the heat sink, **in that** in the natural draft dry cooling tower at least two second heat exchangers (18, 20, 54) are arranged 3 m - 5 m above (28, 68) the highest point (24, 64) of the first heat exchanger (14, 16, 52) at a horizontal distance of from a few tens of metres to 100m from the first heat exchanger (14, 16, 52), and **in that** the part of the pipe system (30, 32, 60, 62) forming the return line for the condensed coolant is configured to have a continuous slope.

2. Fuel-assembly storage pool according to Claim 1, **characterized in that** the flowable coolant (56, 58) is a refrigerant.

3. Fuel-assembly storage pool according to either of Claims 1 and 2, **characterized in that** the at least one first heat exchanger (14, 16, 52) is arranged such that it is suspended.

4. Fuel-assembly storage pool according to one of the preceding claims, **characterized in that** a baffle is arranged on an outer face of the at least one first heat exchanger (14, 16, 52).

5. Fuel-assembly storage pool according to one of the preceding claims, **characterized in that** closure means, which are activated in the event of a sudden pressure drop and stop circulation of the coolant (56, 58), are provided in a point-by-point manner inside the closed circuit (50).

6. Fuel-assembly storage pool according to one of the preceding claims, **characterized in that** the cooling systems are configured in an overredundant manner.

7. Fuel-assembly storage pool according to one of the preceding claims, **characterized in that** the cooling systems are configured in a diverse manner.

8. Fuel-assembly storage pool according to one of the preceding claims, **characterized in that** the cooling system is configured for a cooling output of 5 MW - 30 MW.

## Revendications

1. Bassin d'entreposage d'éléments combustibles présentant un système de refroidissement (10), le système de refroidissement comportant au moins un premier échangeur de chaleur (14, 16, 52) disposé dans le bassin (12) d'entreposage d'éléments combustibles et au moins un deuxième élément échangeur de chaleur (18, 20, 54) disposé au-dessus (28, 68) du point le plus élevé (24, 64) du premier échangeur de chaleur (14, 16, 52) dans un drain thermique situé à distance du premier, les deux échangeurs de chaleur (14, 16, 18, 20, 52, 54) étant raccordés par un système tubulaire (30, 32, 60, 62) en un circuit fermé (50) rempli au moins en partie d'un agent de refroidissement (56, 58) apte à s'écouler de telle sorte que lorsque le premier échangeur de chaleur (14, 16, 52) a une température plus élevée que celle du deuxième échangeur de chaleur (18, 20, 54), une recirculation naturelle du fluide de refroidissement (56, 58) et donc un transport de chaleur (34, 36 ; 70, 72) du bassin (12) d'entreposage d'éléments combustibles au drain thermique soit garanti sans devoir recourir à un ensemble de pompage, le ou les premiers échangeurs de chaleur (14, 16, 52) étant réalisés comme évaporateurs (52) et le ou les deuxièmes échangeurs de chaleur (18, 20, 54) comme condensateurs (54),
**caractérisé en ce que**
plusieurs systèmes de refroidissement indépendants l'un de l'autre dans le circuit (50) sont prévus, **en ce que** comme drain thermique est utilisée une tour (22) de refroidissement sèche à tirage naturel, **en ce que**, au moins un deuxième échangeur de chaleur (18, 20, 54) est disposé dans la tour de refroidissement sèche à tirage naturel, à 3 m - 5 m au-dessus (28, 68) du point le plus haut (24, 64) du premier échangeur de chaleur (14, 16, 52) et à une distance horizontale de quelques dizaines de m à centaines de m du premier échangeur de chaleur (14, 16, 52) et **en ce que** la partie du système tubulaire (30, 32, 60, 62) qui forme le conduit de retour du fluide de refroidissement condensé est réalisée avec une pente constante.

2. Bassin d'entreposage d'éléments combustibles selon la revendication 1, **caractérisé en ce que** le fluide de refroidissement (56, 58) apte à s'écouler est un fluide frigorifique.

3. Bassin d'entreposage d'éléments combustibles selon l'une des revendications 1 ou 2, **caractérisé en ce que** le ou les premiers échangeurs de chaleur (14, 16, 52) sont disposés en suspension.

4. Bassin d'entreposage d'éléments combustibles selon l'une des revendications précédentes, **caractérisé en ce qu'**une tôle de guidage est située sur une surface extérieure du ou des premiers échangeurs de chaleur (14, 16, 52).

5. Bassin d'entreposage d'éléments combustibles selon l'une des revendications précédentes, **caractérisé en ce que** des moyens de fermeture qui sont activés en cas de brusque chute de pression et qui empêchent une recirculation du fluide de refroidissement (56, 58) sont prévus ponctuellement à l'intérieur du circuit fermé (50).

6. Bassin d'entreposage d'éléments combustibles selon l'une des revendications précédentes, **caractérisé en ce que** les systèmes de refroidissement sont sur-redondants.

7. Bassin d'entreposage d'éléments combustibles selon l'une des revendications précédentes, **caractérisé en ce que** les systèmes de refroidissement sont différents les uns des autres.

8. Bassin d'entreposage d'éléments combustibles selon l'une des revendications précédentes, **caractérisé en ce que** le système de refroidissement est conçu pour une puissance de refroidissement de 5 MW à 30 MW.
